# FASCICULE DE BREVET EUROPEEN

(11) **EP 1 805 965 B1**
(45) Date de publication et mention de la délivrance du brevet: **16.11.2011**
(21) Numéro de dépôt: 05805605.2
(22) Date de dépôt: 07.09.2005
(51) Int. Cl.: H04L 29/06, H04L 12/22

(54) **PROCEDE ET SYSTEME DE COMMUNICTION ENTRE UN DISPOSITIF DE STOCKAGE SECURISE D'INFORMATIONS ET AU MOINS UN TIERS, ENTITE, DISPOSITIF ET TIERS CORRESPONDANTS**
VERFAHREN UND SYSTEM ZUR KOMMUNIKATION ZWISCHEN EINEM SICHEREN INFORMATIONSSPEICHERGERÄT UND MINDESTENS EINER DRITTEN INSTANZ, ENTSPRECHENDE EINRICHTUNG, GERÄT UND DRITTE INSTANZ
METHOD AND SYSTEM FOR COMMUNICATION BETWEEN A SECURE INFORMATION STORAGE DEVICE AND AT LEAST ONE THIRD PARTY, AND CORRESPONDING ENTITY, DEVICE AND THIRD PARTY

(30) Priorité: 29.10.2004 FR 0411625
(43) Date de publication de la demande: 11.07.2007
(73) Titulaire: FRANCE TELECOM, 75015 Paris (FR)
(72) Inventeur: LE ROUZIC, Jean-Pierre, F-35700 Rennes (FR); MACARIO-RAT, Gilles, F-92170 Vanves (FR); LECLERCQ, Thierry, F-75013 Paris (FR); BARNAUD, Vincent, F-75015 Paris (FR)
(74) Mandataire: Guéné, Patrick
(86) Numéro de dépôt international: PCT/FR2005/002233
(87) Numéro de publication internationale: WO 2006/048515

(56) Documents cités:
- EP-A- 1 117 077
- US-A- 4 849 614
- US-A1- 2002 040 438

## Description

### 1. Domaine de l'invention

Le domaine de l'invention est celui des dispositifs de stockage sécurisé d'informations, mis à la disposition d'individus (aussi appelés porteurs) par une entité qui assure la gestion de ces dispositifs (aussi appelée opérateur des dispositifs).

Plus précisément, l'invention concerne un procédé et un système de communication entre un dispositif de stockage sécurisé d'informations et au moins un tiers.

Un dispositif de stockage sécurisé d'informations est par exemple réalisé sous la forme d'une carte à puce, d'un dongle (clef USB par exemple), ou de tout autre dispositif matériel ou logiciel. Il comprend typiquement au moins un conteneur sécurisé, dans lequel sont stockées des informations (données et/ou programmes) destinées à être utilisées par un tiers quand il communique avec ce dispositif, pour offrir une ou plusieurs fonctions.

Dans un souci de simplification, dans la suite de la description, on entend par entité tous les moyens (matériels et/ou logiciels) dont dispose cette entité pour jouer son rôle dans le système. De même, on entend par tiers tous les moyens (matériels et/ou logiciels) dont dispose ce tiers pour jouer son rôle dans le système.

L'entité, les tiers et les dispositifs de stockage sécurisé d'informations sont connectés entre eux via un ou plusieurs réseaux de communication.

Classiquement, chaque dispositif peut être connecté au réseau de différentes façons, telles que par exemple : branchement directement (par exemple il possède un serveur SOAP dans le cas d'un réseau IP), branchement par l'intermédiaire d'un élément matériel (comme l'interface d'un poste téléphonique mobile), intermédiation par un logiciel (cas d'un driver de lecteur ISO 7816 ou PKCS).

Le tiers est par exemple un fournisseur de services, tel qu'une banque, une administration, une entreprise, etc.

De nombreuses fonctions peuvent être envisagées, telles que notamment, mais non exclusivement :
- des fonctions d'authentification du porteur par le tiers (réalisant par exemple une authentification forte de type mot de passe semi permanent, mot de passe à usage unique (ou OTP, pour « One Time Password »), challenge de clé secrète (CS), ou encore usage différencié des deux clés d'une bi-clé (PKI)) ;
- des fonctions de porte-monnaie électronique ;
- etc.

### 2. Art antérieur

On discute maintenant les techniques de l'art antérieur, et leurs inconvénients, dans le cas particulier où les dispositifs de stockage sécurisé d'informations sont des dispositifs d'authentification utilisés par les tiers pour authentifier les porteurs de ces dispositifs. Il est clair cependant, comme déjà indiqué ci-dessus, que l'invention s'applique quelle que soit la ou les fonctions que permettent d'offrir aux tiers les informations contenues dans les dispositifs de stockage sécurisé d'informations.

On peut classer les applications utilisant un accès sécurisé en deux catégories :
- celles qui utilisent une sécurisation en ligne (ou synchrone), comme par exemple les applications à carte bancaire et les applications de téléphonie mobile (SIM) ;
- celles qui utilisent une sécurisation par contrôle en temps différé, comme par exemple les courriers électroniques sécurisés ou la télé-déclaration des impôts.

Les architectures d'authentification mises en oeuvre dans les deux cas sont différentes et assez mutuellement exclusives. Dans le premier cas de figure (sécurisation en ligne), les architectures d'authentification sont centralisées, dans le deuxième (sécurisation par contrôle en temps différé) elles sont décentralisées. Les architectures centralisées supportent mal la mutualisation d'applications de différents fournisseurs de services, car par nature il y a un seul élément centralisé assurant cette authentification.

On a déjà mis en oeuvre des dispositifs d'authentification forte (par exemple avec une double authentification : « ce que je sais », le code PIN, et « ce que je possède », la carte à puce ou le dongle) dans les deux types d'architecture, mais il n'y a pas de cas où un dispositif se prête bien à la fois aux différents types d'authentification forte (OTP, CS, PKI) et est capable d'être un élément d'authentification indifféremment dans des architectures centralisées ou décentralisées. Au contraire, les dispositifs d'authentification sont habituellement spécialisés à la fois dans un type d'authentification forte et une architecture donnée, sachant que l'on ne peut croiser tous les types d'authentification forte avec tous les types d'architecture.

En d'autres termes, chaque tiers met en oeuvre des dispositifs d'authentification qui lui sont propres et qui sont spécifiques à une méthode d'authentification (OTP, CS, PKI...) et à une infrastructure d'authentification (architecture centralisée ou décentralisée). Les coûts d'investissement et d'exploitation ne sont donc pas mutualisés entre différents tiers. La gestion des dispositifs d'authentification est lourde car ces dispositifs sont matériels et il faut à chaque fois une infrastructure d'enregistrement spécifique, avec des coûts spécifiques d'apprentissage et des coûts induits par l'absence de mutualisation.

Afin de remédier à ce problème, il a été proposé plusieurs solutions techniques, comme par exemple celle appelée « Global Open Platform » (voir le document « Global Platform Smart Card Management System Functional requirements, version 4.0 »), permettant à plusieurs tiers (fournisseurs de services) d'utiliser un même dispositif d'authentification de type carte à puce (dispositif multi-applicatif), sans être lié à l'entité (aussi appelée opérateur) qui assure la gestion des cartes (notamment leur fourniture et leur émission).

Cependant, cette technique connue n'est pas optimale car, à l'issue de la phase de pré-personnalisation, elle fait appel à des tiers de confiance pour rendre indépendant de l'opérateur le tiers fournisseur de services.

En outre, cette technique connue est extrêmement rigide puisque l'émetteur de la carte doit si possible connaître à l'avance les applications qui seront déposées sur la carte. Il est possible de télécharger des nouvelles applications en cours de vie de la carte, mais c'est une image entière de la carte qui doit être rechargée.

EP 1117077 A2 décrit un système comprenant une carte à puce, un contrôleur de gestion de la carte, et plusieurs entreprises qui utilisent de façon sécurisée la mémoire de la carte à puce . Une pluralité d'espaces sécurisés sont créés dans la mémoire de la carte pour stocker des données de sécurité et de commandes. Les données de sécurité peuvent être mises à jour sous la demande des organisations d'entreprises et sous la supervision du contrôleur.

### 3. Objectifs de l'invention

L'invention a notamment pour objectif de pallier ces différents inconvénients de l'état de la technique.

Plus précisément, l'un des objectifs de la présente invention, dans au moins un mode de réalisation, est de fournir une technique de communication entre un dispositif de stockage sécurisé d'informations et au moins un tiers, qui permette au tiers de déposer et/ou utiliser et/ou modifier, de façon sécurisée et en cours de cycle de vie du dispositif, des informations dans un conteneur sécurisé compris dans le dispositif et qui est spécifique à ce tiers.

Ainsi, l'invention vise notamment, mais non exclusivement, à permettre à un tiers d'effectuer, en cours de cycle de vie du dispositif, une première personnalisation (qui remplace une pré-personnalisation classique en usine) ou une post-personnalisation (si une pré-personnalisation classique en usine ou une première personnalisation selon l'invention a déjà été effectuée) d'un conteneur sécurisé compris dans le dispositif et attribué à ce tiers.

L'invention a également pour objectif, dans au moins un mode de réalisation, de fournir une telle technique telle que plusieurs tiers disposent chacun d'un conteneur sécurisé spécifique compris dans un même dispositif (mutualisation du dispositif), et telle que chaque tiers peut déposer et/ou utiliser et/ou modifier des informations dans le conteneur sécurisé qui lui est spécifique, indépendamment des autres tiers. Notamment, mais non exclusivement, chaque tiers doit pouvoir personnaliser le contenu de son conteneur sécurisé, indépendamment des autres tiers et du contenu des autres conteneurs sécurisés compris dans le même dispositif.

L'invention a égaiement pour objectif, dans au moins un mode de réalisation, de fournir une telle technique permettant d'interdire l'accès à un conteneur sécurisé à l'entité de gestion des dispositifs, ainsi qu'aux autres tiers (dans le cas où le dispositif comprend plusieurs conteneurs sécurisés attribués à différents tiers).

Un autre objectif de l'invention, dans au moins un mode de réalisation, est de fournir une telle technique dans laquelle l'entité de gestion des dispositifs (opérateur) joue le rôle d'un acteur responsable vers lequel les porteurs de dispositifs peuvent se tourner en cas de problème sur leurs dispositifs (opposition, remplacement, etc.), et qui est le garant de la liberté et la protection de la vie privée des porteurs (protection de données du porteur contre un accès non autorisé, voire illégal, par des tiers).

Un objectif complémentaire de l'invention, dans le cas où les informations stockées dans un conteneur sécurisé sont utilisées par un tiers pour authentifier le porteur du dispositif, est de fournir une telle technique qui ne soit pas liée à une méthode d'authentification et qui n'impose pas un modèle d'architecture centralisé ou décentralisé.

### 4. Caractéristiques essentielles de l'invention

Ces différents objectifs, ainsi que d'autres qui apparaîtront par la suite, sont atteints selon l'invention à l'aide d'un procédé de communication entre un dispositif de stockage sécurisé d'informations et au moins un tiers avec lequel sont échangées lesdites informations, une entité assurant la gestion d'une pluralité de dispositifs de stockage sécurisé d'informations à laquelle appartient ledit dispositif. Selon l'invention, ce procédé comprend les étapes suivantes :
- l'entité dépose dans un conteneur sécurisé, compris dans ledit dispositif et spécifique à un tiers donné, une autorisation de communiquer entre le conteneur sécurisé et ledit tiers donné ;
- l'entité envoie au tiers donné un identifiant du dispositif, une adresse du dispositif au sein d'un réseau de communication, un identifiant du conteneur sécurisé et ladite autorisation de communiquer ;
- le tiers donné tente d'établir une communication avec le conteneur sécurisé, en utilisant l'adresse du dispositif, l'identifiant du dispositif, l'identifiant du conteneur sécurisé et l'autorisation de communiquer ;
- avant d'accepter la communication entre le tiers donné et le conteneur sécurisé, le dispositif vérifie que l'autorisation de communiquer transmise par le tiers est acceptable au vu de l'autorisation de communiquer préalablement déposée par l'entité dans le conteneur sécurisé.

Le principe général de l'invention consiste donc, après que le dispositif a été remis à un porteur, à déposer dans un conteneur sécurisé compris dans ce dispositif une autorisation de communication entre ce conteneur sécurisé et un tiers, cette autorisation de communication conditionnant toute acceptation ultérieure par le dispositif d'une communication entre ce conteneur sécurisé et ce tiers.

La communication entre le conteneur sécurisé et le tiers vise à permettre au tiers de déposer, utiliser ou modifier des informations dans le conteneur sécurisé. Ainsi, l'invention permet à un tiers d'effectuer une première personnalisation ou une post-personnalisation d'un conteneur sécurisé compris dans un dispositif, après que ce dispositif a été remis à un porteur (c'est-à-dire par téléchargement).

Il est important de noter que l'entité joue un rôle essentiel dans le mécanisme de dépôt d'une autorisation de communication dans le conteneur sécurisé, en garantissant que le conteneur sécurisé n'est utilisé que par le tiers à qui il a été affecté.

Dans un mode de réalisation préférentiel de l'invention, le procédé comprend en outre les étapes suivantes, effectuées après que la communication entre le conteneur sécurisé et le tiers donné a été acceptée :
- le tiers donné envoie au conteneur sécurisé une première autorisation d'accès spécifique au tiers donné pour le conteneur sécurisé ;
- le conteneur sécurisé stocke ladite première autorisation d'accès, de sorte que seul le tiers donné, qui dispose de la première autorisation d'accès, est ultérieurement autorisé par le conteneur sécurisé, indépendamment de l'entité, à utiliser et modifier des informations contenues dans le conteneur sécurisé.

De cette façon, après que le conteneur sécurisé a stocké la première autorisation d'accès spécifique au tiers donné, les informations contenues dans le conteneur sécurisé sont sous le seul contrôle de ce tiers et sont inaccessibles aussi bien à l'entité qu'aux autres tiers (dans le cas où le dispositif est mutualisé entre plusieurs tiers). Le tiers donné peut donc accéder directement à son conteneur sécurisé, sans intervention de l'entité, et donc sans mettre à nouveau en oeuvre le mécanisme précité (basé sur le dépôt par l'entité, dans le conteneur sécurisé, d'une autorisation de communiquer entre le tiers et le conteneur sécurisé).

En d'autres termes, dans ce mode de réalisation préférentiel de l'invention, on découple l'aspect lié à la gestion du dispositif (et notamment l'émission de celui-ci), de l'aspect lié à la fonction réalisée avec les informations contenues dans le conteneur sécurisé. En effet, c'est l'entité (opérateur) qui assure la gestion du dispositif, alors que c'est le tiers qui assure la fonction précitée.

Ce découplage permet de rendre l'architecture d'authentification du dispositif par l'entité, indépendante de la méthode d'authentification mise en oeuvre par le tiers pour authentifier le porteur du dispositif. En d'autres termes, dans ce cas, la solution de l'invention n'impose pas un modèle d'architecture (centralisée ou décentralisée) et n'est pas liée à une méthode d'authentification (OTP, CS, PKI...) qui serait commune à tous les tiers.

De façon avantageuse, le procédé comprend en outre les étapes suivantes :
- l'entité envoie au dispositif une demande de révocation de ladite première autorisation d'accès spécifique au tiers donné pour le conteneur sécurisé ;
- le dispositif révoque la première autorisation d'accès spécifique au tiers donné pour le conteneur sécurisé.

Ainsi, l'entité ne connaît pas la première autorisation d'accès spécifique au tiers, mais elle peut la révoquer, par exemple à la demande du porteur du dispositif (en cas de perte, vol, etc.) ou du tiers (en cas de révocation du porteur du dispositif ou de non reconduction d'un contrat entre l'entité et le tiers).

Avantageusement, l'étape de révocation de la première autorisation d'accès est précédée de l'étape suivante : le dispositif authentifie l'entité, avec une seconde autorisation d'accès préalablement fournie par l'entité et déposée dans le dispositif, avant d'accepter de révoquer la première autorisation d'accès spécifique au tiers donné pour le conteneur sécurisé.

Selon une caractéristique avantageuse, l'étape de dépôt de l'autorisation de communiquer dans le conteneur sécurisé est précédée des étapes suivantes :
- l'entité transmet au dispositif une demande de dépôt de ladite autorisation de communiquer dans le conteneur sécurisé ;
- le dispositif authentifie l'entité, avec une troisième autorisation d'accès préalablement fournie par l'entité et déposée dans le dispositif, avant d'accepter le dépôt dans le conteneur sécurisé de l'autorisation de communiquer.

Il est à noter que les seconde et troisième autorisations d'accès, spécifiques à l'entité, peuvent être confondues.

Dans un mode de réalisation avantageux de l'invention, l'étape de dépôt de l'autorisation de communiquer dans le conteneur sécurisé est précédée de l'étape suivante : le tiers donné demande à l'entité de déposer dans le conteneur sécurisé l'autorisation de communiquer entre le tiers donné et le conteneur sécurisé, le tiers donné fournissant à l'entité l'identifiant du dispositif.

Avantageusement, après que la communication entre le conteneur sécurisé et le tiers donné a été acceptée, le tiers donné envoie des informations au conteneur sécurisé afin que le conteneur sécurisé les stocke.

De façon préférentielle, les informations stockées dans le conteneur sécurisé appartiennent au groupe comprenant des données et des programmes.

De façon avantageuse, les informations stockées dans le conteneur sécurisé permettent de réaliser une fonction appartenant au groupe comprenant :
- authentification par le tiers donné d'un porteur du dispositif ;
- porte-monnaie électronique ;
- autorisation d'utilisation d'un appareil avec lequel coopère le dispositif ;
- maintenance d'un appareil avec lequel coopère le dispositif ;
- gestion d'une fonctionnalité d'un appareil avec lequel coopère le dispositif.

Cette liste est nullement exhaustive.

Avantageusement, le tiers donné est un fournisseur de services.

Dans un mode de réalisation particulier de l'invention, le procédé permet la communication entre le dispositif et au moins deux tiers, au moins un conteneur spécifique à chaque tiers étant compris dans le dispositif.

Ainsi, dans ce mode de réalisation particulier, le dispositif comprend plusieurs conteneurs sécurisés qui sont attribués à différents tiers, avec au moins un conteneur par tiers (mutualisation du dispositif). Chaque tiers peut déposer et/ou utiliser et/ou modifier des informations dans le conteneur sécurisé qui lui est spécifique, indépendamment des autres tiers (et même indépendamment de l'entité, dans le cas préférentiel où ce tiers a déposé dans son conteneur sécurisé une première autorisation d'accès qui lui est spécifique).

L'invention concerne également un système de communication entre un dispositif de stockage sécurisé d'informations et au moins un tiers avec lequel sont échangées lesdites informations, une entité assurant la gestion d'une pluralité de dispositifs de stockage sécurisé d'informations à laquelle appartient ledit dispositif. Ce système est tel que :
- l'entité comprend des moyens de dépôt dans un conteneur sécurisé, compris dans ledit dispositif et spécifique à un tiers donné, d'une autorisation de communiquer entre le conteneur sécurisé et ledit tiers donné ;
- l'entité comprend des moyens d'envoi au tiers donné d'un identifiant du dispositif, une adresse du dispositif au sein d'un réseau de communication, un identifiant du conteneur sécurisé et ladite autorisation de communiquer ;
- le tiers donné comprend des moyens permettant de tenter d'établir une communication avec le conteneur sécurisé, en utilisant l'adresse du dispositif, l'identifiant du dispositif, l'identifiant du conteneur sécurisé et l'autorisation de communiquer ;
- le dispositif comprend des moyens de vérification que l'autorisation de communiquer transmise par le tiers donné est acceptable au vu de l'autorisation de communiquer préalablement déposée par l'entité dans le conteneur sécurisé, de sorte que le dispositif n'accepte la communication entre le tiers donné et le conteneur sécurisé que si les moyens de vérification décident que l'autorisation de communiquer transmise par le tiers est acceptable.

L'invention concerne aussi un entité assurant la gestion d'une pluralité de dispositifs de stockage sécurisé d'informations, cette entité comprenant :
- des moyens de dépôt dans un conteneur sécurisé, compris dans un dispositif donné et spécifique à un tiers donné, d'une autorisation de communiquer entre le conteneur sécurisé et ledit tiers donné ;
- des moyens d'envoi au tiers donné d'un identifiant du dispositif donné, une adresse du dispositif donné au sein d'un réseau de communication, un identifiant du conteneur sécurisé et ladite autorisation de communiquer ;
de sorte que le tiers donné puisse tenter d'établir une communication avec le conteneur sécurisé, en utilisant l'adresse du dispositif donné, l'identifiant du dispositif donné, l'identifiant du conteneur sécurisé et l'autorisation de communiquer, et que avant d'accepter la communication entre le tiers donné et le conteneur sécurisé, le dispositif donné puisse vérifier que l'autorisation de communiquer transmise par le tiers est acceptable au vu de l'autorisation de communiquer préalablement déposée par l'entité dans le conteneur sécurisé.

L'invention concerne encore un dispositif de stockage sécurisé d'informations, du type comprenant des moyens de communication avec au moins un tiers avec lequel sont échangées lesdites informations, ce dispositif comprenant :
- des moyens de stockage dans un conteneur sécurisé, compris dans ledit dispositif et spécifique à un tiers donné, d'une autorisation de communiquer entre le conteneur sécurisé et ledit tiers donné, ladite autorisation de communiquer étant déposée par une entité assurant la gestion d'une pluralité de dispositifs de stockage sécurisé d'informations à laquelle appartient ledit dispositif ;
- des moyens de vérification qu'une autorisation de communiquer transmise par le tiers donné est acceptable au vu de l'autorisation de communiquer préalablement déposée par l'entité dans le conteneur sécurisé, de sorte que le dispositif n'accepte la communication entre le tiers donné et le conteneur sécurisé que si les moyens de vérification décident que l'autorisation de communiquer transmise par le tiers est acceptable.

L'invention concerne aussi un tiers, du type comprenant des moyens de communication avec un dispositif de stockage sécurisé d'informations, ce tiers comprenant :
- des moyens de réception, en provenance d'une entité assurant la gestion d'une pluralité de dispositifs de stockage sécurisé d'informations à laquelle appartient ledit dispositif, d'un identifiant du dispositif, une adresse du dispositif au sein d'un réseau de communication, un identifiant d'un conteneur sécurisé, compris dans ledit dispositif et spécifique audit tiers, et une autorisation de communiquer entre le conteneur sécurisé et ledit tiers ;
- des moyens permettant de tenter d'établir une communication avec le conteneur sécurisé, en utilisant l'adresse du dispositif, l'identifiant du dispositif, l'identifiant du conteneur sécurisé et l'autorisation de communiquer ;
de sorte qu'avant d'accepter la communication entre le tiers et le conteneur sécurisé, le dispositif puisse vérifier que l'autorisation de communiquer transmise par le tiers est acceptable au vu d'une autorisation de communiquer préalablement déposée par l'entité dans le conteneur sécurisé.

### 5. Liste des figures

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- les figures 1 à 3 illustrent chacune une phase distincte d'un mode de réalisation particulier du procédé selon l'invention de communication entre un dispositif de stockage sécurisé d'informations et un tiers, à savoir :
   * sur la figure 1, une phase d'initialisation d'un accès du tiers à un conteneur sécurisé compris dans le dispositif ;
   * sur la figure 2, une phase d'accès du tiers à ce conteneur sécurisé ;
   * sur la figure 3, une phase de révocation d'une autorisation d'accès spécifique préalablement attribuée au tiers ; et
- la figure 4 présente un schéma bloc fonctionnel d'un mode de réalisation particulier du dispositif de stockage sécurisé selon l'invention.

### 6. Description d'un mode de réalisation de l'invention

Dans le mode de réalisation particulier de l'invention décrit ci-après, le système de l'invention comprend :
- une pluralité de dispositifs de stockage sécurisé d'informations, par exemple des dongles, comprenant chacun un ou plusieurs conteneurs sécurisés ;
- une pluralité de porteurs à qui sont confié les dispositifs de stockage sécurisé d'informations ;
- une entité, appelée ci-après opérateur, qui assure la gestion (y inclus la distribution) des dispositifs de stockage sécurisé d'informations ;
- un ou plusieurs tiers, qui sont par exemple des fournisseurs de services (banques, administrations, entreprises, etc.) ;
- un ou plusieurs fournisseurs d'identité (ou IDP, pour « Identity Provider » en anglais), éventuellement confondus avec l'opérateur ;
- un ou plusieurs réseaux de communication permettant de connecter entre eux l'entité (opérateur), les tiers (fournisseurs de services), les dispositifs de stockage sécurisé d'informations (dongles) et les fournisseurs d'identité (IDP).

L'opérateur est l'acteur qui déploie le système de l'invention et équipe les porteurs. Chaque dispositif étant individualisé dès l'origine par un moyen d'authentification qui lui est propre, l'opérateur est capable d'identifier et authentifier ce dispositif. L'opérateur offre ses conteneurs sécurisés (compris dans les dispositifs qu'il confie aux porteurs) en location ou vente aux fournisseurs de services. L'opérateur est par exemple connecté à différents fournisseurs d'identité (IDP), par exemple en tant que fournisseurs d'identité déportés, et chargés de l'authentification des porteurs.

Comme expliqué en détail par la suite, l'opérateur possède une autorisation d'accès (par exemple un secret au sens cryptographique) qui lui est spécifique et lui permet de gérer les conteneurs sécurisés d'un dispositif confié à un porteur. Au moyen de cette autorisation d'accès qui lui est spécifique, l'opérateur peut notamment autoriser l'acceptation par un conteneur sécurisé donné d'une autre autorisation d'accès, spécifique à un fournisseur d'accès donné. Il peut également révoquer une autorisation d'accès spécifique à un fournisseur d'accès, sans avoir besoin de connaître celle-ci. D'une manière générale, l'opérateur reste garant, vis-à-vis du porteur et des fournisseurs de services, de la sécurité, l'étanchéité et la fiabilité du système global.

Les porteurs sont des individus qui disposent d'un dispositif confié par l'opérateur. Le porteur utilise le dispositif et chaque conteneur sécurisé compris dans celui-ci comme s'il s'agissait d'autant de dispositifs distincts. Par exemple, les conteneurs sécurisés sont accessibles par des interfaces de programmation (ou API, pour «application programming interface ») standardisées comme ISO 7816, PKCS ou autre.

Les conteneurs sécurisés compris dans les dispositifs possèdent un contenu lisible ou exploitable seulement par ceux qui possèdent des droits d'accès à ces conteneurs sécurisés. Ces droits sont délégués par l'opérateur sous le contrôle du porteur. Les informations contenues dans les conteneurs sécurisés sont par exemple des données et programmes, tels que par exemple des documents non spécialisés, des certificats ou des petits programmes, ou applets, dans le cadre de multiples usages (dont notamment mais non exclusivement l'authentification).

Le fournisseur de services est un acteur qui contracte avec l'opérateur pour pouvoir utiliser les dispositifs déployés par l'opérateur. L'opérateur permet au fournisseur de services de proposer au porteur de recevoir sur son dispositif (et plus précisément dans un des conteneurs sécurisés de ce dispositif) des informations (données et/ou programmes) permettant ensuite une relation directe entre le fournisseur de services et le porteur. Dans l'application particulière à l'authentification, le dispositif assure donc une fonction de « porte-signatures » pour un ou plusieurs fournisseurs de services.

Comme expliqué en détail par la suite, chaque fournisseur de services dispose du droit de générer lui-même une autorisation d'accès qui lui est spécifique (par exemple sous la forme d'un secret), et qui après qu'elle a été autorisée par l'opérateur lui donne accès directement (c'est-à-dire indépendamment de l'opérateur) à un conteneur sécurisé.

Le fournisseur de service doit mettre en oeuvre son propre mécanisme d'enregistrement des porteurs, en tant qu'utilisateurs de conteneurs sécurisés attribués à ce fournisseur de services. Ce mécanisme est notamment garant de l'accord du porteur sur l'usage d'un conteneur sécurisé de son dispositif par le fournisseur de service.

Le fournisseur de service est identifié par un identifiant dans le dispositif confié au porteur. Le fournisseur de service peut accéder à ce dispositif quand il a obtenu une identification réseau du dispositif, authentifié par un fournisseur d'identité (IDP).

Le fournisseur d'identité est capable d'authentifier un dispositif de stockage sécurisé d'informations à une adresse réseau donnée. La méthode d'authentification est indifférente pour le dispositif. Le fournisseur d'identité donne un pointeur anonyme ou non au fournisseur de service en réponse à une requête d'authentification.

Dans la suite de la description, on considère à titre d'exemple que le dispositif de stockage sécurisé d'informations est un dongle (clef USB par exemple). Il est clair cependant que l'invention s'applique également avec tout autre type de réalisation, matériel ou logiciel, de ce dispositif (notamment sous la forme d'une carte à puce).

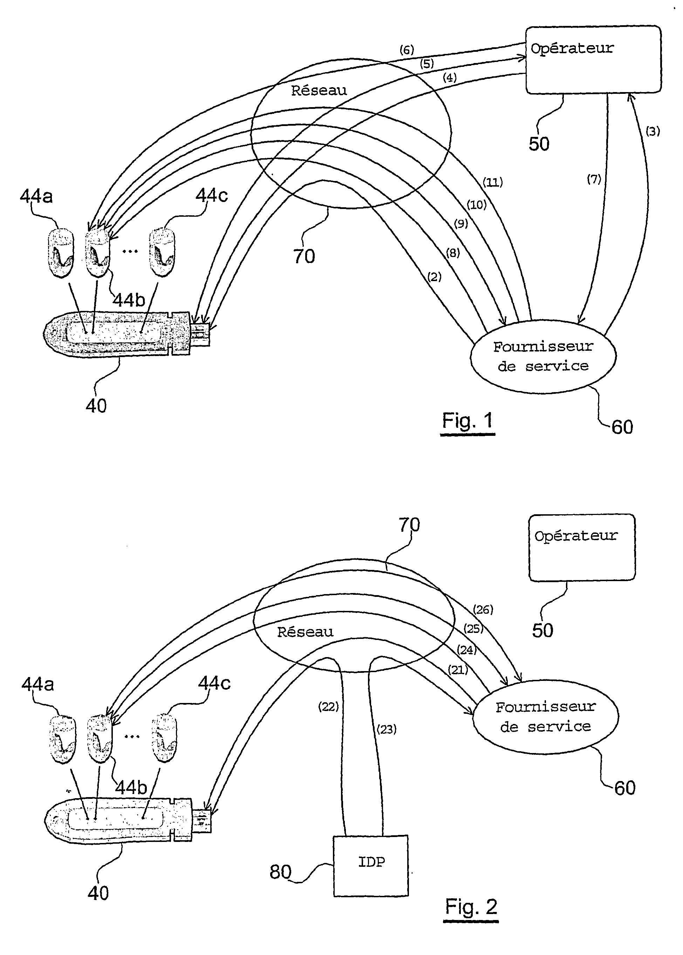

On présente maintenant, en relation avec la **figure 1****,** une première phase d'un mode de réalisation particulier du procédé selon l'invention de communication entre un dispositif de stockage sécurisé d'informations (dongle) et un tiers (fournisseur de services). Cette première phase est une phase d'initialisation d'un accès du fournisseur de services à un conteneur sécurisé compris dans le dispositif.

Dans une première étape (non illustrée), l'utilisateur final (terminal) dispose d'un dongle 40 comprenant plusieurs conteneurs sécurisés (trois dans l'exemple illustré) 44a, 44b et 44c. Ce dongle 40 nécessite un identifiant, éventuellement confondu avec l'adresse de ce dongle dans un réseau de communication 70.

Dans une deuxième étape (2), un fournisseur de services 60 qui veut communiquer avec l'un de ces conteneurs sécurisés (par exemple celui référencé 44b) identifie le dongle 40. On suppose ici que le porteur du dongle est un client de ce fournisseur de services.

Dans une troisième étape (3), le fournisseur de services 60 s'adresse à un opérateur 50 qui gère les dongles et les conteneurs sécurisés compris dans ceux-ci, pour lui demander de déposer une autorisation de communiquer avec un conteneur sécurisé donné (par exemple celui référencé 44b). Le fournisseur de services envoie à l'opérateur au moins l'identification du dongle (par exemple le numéro de série tel qu'il est imprimé sur le dongle du client, ou le "handle" anonyme d'un fournisseur d'identité (IDP), ou encore le numéro d'identification tel qu'il pourrait être lu dans le certificat d'identification du dongle si le choix d'implémentation d'une identification du dongle par un certificat PKI ou un certificat d'authentification anonyme était retenu).

Dans une étape optionnelle (non illustrée) (option a), le fournisseur de services 60 demande à l'opérateur 50 un identifiant du conteneur sécurisé 44b qui est affecté à ce fournisseur de service en ce qui concerne ce client. Cette étape est optionnelle car dans une autre implémentation (option b), l'opérateur donne cette information au fournisseur de services dès l'établissement du contrat qui les lient.

Dans une quatrième étape (4), l'opérateur 50 fait au dongle 40 une demande de dépôt d'information dans le conteneur sécurisé 44b concerné.

Dans une cinquième étape (5), le dongle 40 authentifie l'opérateur 50 au moyen d'une autorisation d'accès (un secret) spécifique à l'opérateur et qui a été déposée à la personnalisation du dongle, avant sa commercialisation.

Dans une sixième étape (6), l'opérateur 50 dépose dans le conteneur sécurisé 44b l'autorisation de communiquer entre ce conteneur sécurisé et le fournisseur de services 60.

Dans une septième étape (7), l'opérateur 50 envoie au minimum sur le réseau 70, à destination du fournisseur de services 60, l'identifiant du dongle 40 concerné, l'adresse réseau de ce dongle, l'identifiant du conteneur sécurisé 44b, et l'autorisation de communiquer précitée.

Dans une huitième étape (8), le fournisseur de services 60 s'adresse directement au conteneur sécurisé 44b du dongle 40, du fait qu'il connaît l'identifiant et l'adresse réseau de ce dongle ainsi que l'identifiant du conteneur sécurisé 44b, et fournit l'autorisation de communiquer précitée.

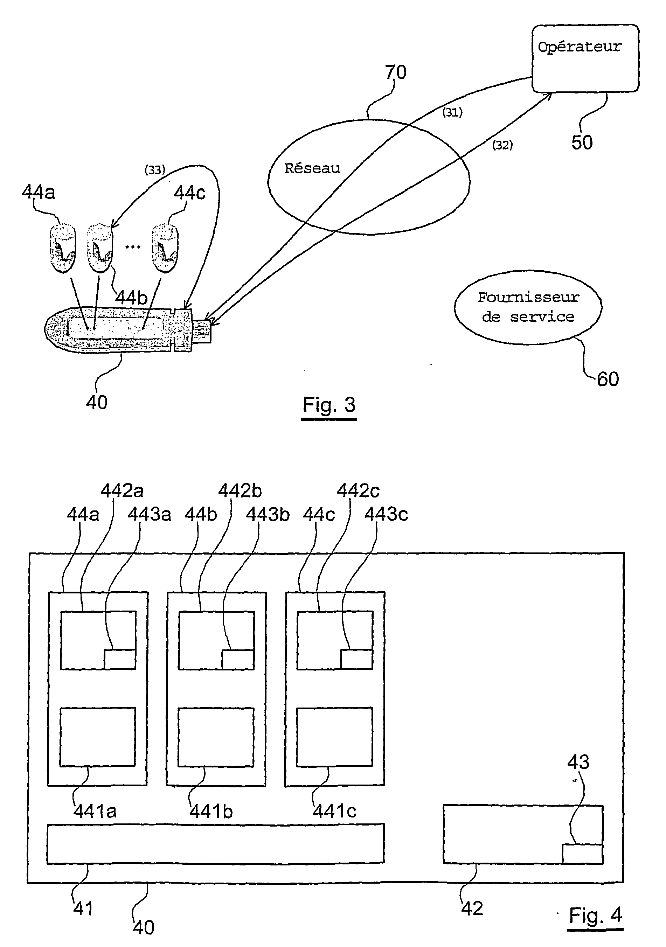

Dans une neuvième étape (9), le dongle 40 vérifie préalablement l'autorisation de communiquer précitée, avant d'accepter la communication entre le conteneur sécurisé 44b et le fournisseur de services 60. Plus précisément, cette vérification est par exemple effectuée par le système d'exploitation du dongle, et en cas de résultat positif ce dernier demande au système d'exploitation du conteneur sécurisé d'accepter le secret que le fournisseur de services va lui fournir via la communication précitée (voir description de la figure 4).

Dans une dixième étape (10), le fournisseur de services 60 émet vers le conteneur sécurisé 44b sa propre autorisation d'accès à ce conteneur sécurisé, afin qu'elle y soit stockée pour être utilisée ultérieurement (c'est-à-dire à chaque fois que le fournisseur d'accès voudra à nouveau communiquer avec le conteneur sécurisé 44b ; voir description de la figure 2). De cette façon, le fournisseur d'accès devient indépendant de l'opérateur. L'opérateur ne connaît pas cette autorisation spécifique au fournisseur de services. Il ne peut donc l'emprunter à l'insu du fournisseur de service. Il a le pouvoir par contre de la révoquer (voir description de la figure 3).

Dans une onzième étape (11), le fournisseur de services 60 peut maintenant déposer dans le conteneur sécurisé 44b des données et programmes qui seront sous sont seul contrôle et inaccessible aux autres fournisseur de service ainsi qu'à l'opérateur 50.

Ainsi, c'est l'opérateur qui garantit l'étanchéité des conteneurs sécurisés. Seul le fournisseur de service qui a déposé des informations dans un conteneur sécurisé peut accéder à ces informations, et il ignore l'identité des fournisseurs de service qui utilisent les autres conteneurs sécurisés du même dongle et la nature des informations qu'ils y ont déposées.

On présente maintenant, en relation avec la **figure 4****,** un mode de réalisation particulier du dispositif de stockage sécurisé selon l'invention.

Dans ce mode de réalisation, le dispositif 40 comprend un système d'exploitation (ou OS, pour « Operating System » en anglais) 41, une zone mémoire 42 et trois conteneurs sécurisés 44a, 44b et 44c. L'invention n'est bien sûr pas limitée à cette valeur particulière du nombre de conteneurs sécurisés.

La zone mémoire 42 stocke notamment l'autorisation d'accès 43 spécifique à l'opérateur (voir la discussion ci-dessus relative à la cinquième étape (5) de la phase d'initialisation illustrée sur la figure 1).

Chaque conteneur sécurisé 44a, 44b ou 44c comprend un système d'exploitation (OS) 441a, 441b ou 441c, ainsi qu'une zone mémoire 442a, 442b ou 442c. Le système d'exploitation (OS) de chaque conteneur sécurisé peut aussi être vu comme les couches basses d'une pile informatique. Chaque zone mémoire 442a, 442b ou 442c stocke notamment l'autorisation d'accès 443a, 443b ou 443c spécifique au fournisseur de services (voir la discussion ci-dessus relative à la dixième étape (10) de la phase d'initialisation illustrée sur la figure 1).

Plus précisément, le système d'exploitation (programme natif (OS)) 41 du dispositif 40 possède par exemple des fonctionnalités qui s'apparentent à celle d'un système d'exploitation lui-même support de systèmes d'exploitation virtuels comme CP/CMS (nommé aussi VM/370) ou encore à un serveur d'application. Ainsi, il peut faire tourner différentes machines virtuelles, correspondant aux différents conteneurs sécurisés, dans des espaces mémoires et des systèmes de fichiers complètement virtuels, séparés et isolés. En d'autres termes, chaque machine virtuelle est le support d'une fonction « conteneur sécurisé ». Elle régit l'accès aux données permanentes ou volatiles, ainsi que l'exécution de programmes, par exemple au moyen des API ISO 7816 ou PKCS.

Le système d'exploitation 41 du dispositif 40 est aussi chargé des relations avec les fournisseurs de service, l'opérateur et les fournisseurs d'identité (IDP). Chaque conteneur sécurisé connaît le secret partagé avec le fournisseur de service. Ce secret a été téléchargé sous le contrôle du système d'exploitation 41 du dispositif 40. C'est ce système d'exploitation 41 qui peut autoriser un conteneur sécurisé à accepter un nouveau secret partagé avec un fournisseur de service, sans pour autant connaître ce secret qui est dans le domaine de la machine virtuelle et inaccessible, par construction du dispositif 40, au système d'exploitation 41 de ce dispositif.

L'espace mémoire de travail de chaque conteneur sécurisé est complètement inaccessible à un autre conteneur sécurisé. Chaque machine virtuelle est donc inconsciente de l'existence d'autres machines virtuelles et pense jouir de tout le potentiel du dispositif. Le cas échéant il est possible de réserver des ressources mémoire qui ne seront utilisées que par l'un des conteneurs sécurisés.

Chaque conteneur sécurisé peut accepter ou fournir des données de/à l'extérieur (« Over The Air ») de façon sécurisée car il y a un secret partagé entre ce conteneur et l'affectataire de ce conteneur (le fournisseur de service). Ce secret peut être changé par l'opérateur, sous le contrôle du système d'exploitation du dispositif, en fonction de l'évolution des affectataires (les fournisseurs de service) des conteneurs sécurisés. Il existe par exemple une base de donnée dans le dispositif pour connaître l'identification des fournisseurs de service habilités à utiliser un conteneur sécurisé. Pour chaque conteneur sécurisé, cette base contient un doublet comprenant un identifiant du fournisseur de service, et le secret partagé avec ce fournisseur de service. Pour permettre la mise à jour des secrets d'accès aux conteneurs sécurisé, il y a aussi une authentification de la plateforme de l'opérateur au moyen d'un autre secret partagé. Celui-ci est implanté à la fabrication dans une zone protégée. Pour que l'affectataire d'un conteneur sécurisé puisse communiquer avec celui-ci, il faut qu'il est un identifiant de dispositif, qui peut être obtenu via le système d'authentification de l'opérateur.

On présente maintenant, en relation avec la figure 2, une deuxième phase du mode de réalisation particulier du procédé selon l'invention, à savoir une phase d'accès du fournisseur de service 60 au conteneur sécurisé 44b qui lui a été attribué.

On suppose que la première phase décrite ci-dessus en relation avec la figure 1 a déjà été effectuée, et donc que le conteneur sécurisé 44b stocke notamment l'autorisation d'accès spécifique au fournisseur de services 60.

Dans une première étape (21), le fournisseur de service 60 demande au porteur du dongle 40 de s'identifier auprès d'un fournisseur d'identité (IDP) 80, afin de connaître la correspondance entre l'adresse réseau du dongle et l'identité du porteur.

Il est à noter qu'il y a deux méthodes d'accès au dongle 40 pour un fournisseur de service 60 : soit le fournisseur de service est capable de dialoguer directement avec le dongle en ligne, soit le fournisseur de service demande à l'opérateur de procéder à l'authentification du dongle (lui-même ou par l'intermédiaire d'un IDP). L'intérêt de la deuxième solution (qui est celle décrite ci-dessus et illustrée sur la figure 2) est qu'elle permet d'empêcher un fournisseur de service non lié à l'opérateur d'obtenir une forme d'authentification du dongle, et donc du porteur : soit en envoyant un aléa constant, permettant d'obtenir toujours le même réponse d'un dongle donné, soit en accédant en lecture à un conteneur sécurisé qui serait libre en lecture pour y trouver des informations récurrentes. Il s'agit de préserver les intérêts commerciaux des fournisseurs de service qui ont contracté avec l'opérateur.

Dans une deuxième étape (22), si le fournisseur de service 60 possède une relation avec le fournisseur d'identité (IDP) 80, celui-ci établit cette authentification.

Dans une troisième étape (23), si cette authentification est valide, le fournisseur d'identité (IDP) informe le fournisseur de service qu'à cette adresse réseau il y a un porteur identifié. Ceci quelle que soit la méthode d'authentification (PKI, OTP, challenge clé secrète, etc). La transmission de cette information au fournisseur de service peut se faire soit directement par un "canal hors bande", soit par un cookie sur le navigateur, c'est-à-dire un couple (identifiant du porteur, adresse réseau du dongle). Le fournisseur de service connaît donc le dongle grâce a l'identifiant et sait comment s'adresser à lui grâce à l'adresse réseau.

Dans une quatrième étape (24), le fournisseur de service 60 peut donc s'adresser directement au conteneur sécurisé 44b du dongle, pour lui demander une opération, par exemple au moyen des API ISO 7816 ou PKCS. Cette requête est accueillie par le système d'exploitation (OS) du dongle 40 qui va chercher quel conteneur sécurisé est destinataire de la requête.

On décrit ci-après la cinquième étape (25). Le problème coté dongle 40, c'est de se protéger contre les tentatives d'accès "illégales" à un conteneur sécurisé. Le système d'exploitation du conteneur sécurisé est chargé de ce contrôle. Pour cela, il faut qu'il connaisse l'identité du fournisseur de service 60. Si celui-ci fait partie des fournisseurs de service autorisés à accéder à ce conteneur sécurisé 44b, il faut en outre que le système d'exploitation du conteneur sécurisé sache que ce fournisseur de service 60 a légalement accès à ce conteneur sécurisé 44b (cette information a été fournie par l'opérateur via le système d'exploitation du dongle), et qu'il authentifie le fournisseur de service. Il le fait par exemple via un challenge de clé secrète. Pour pouvoir faire ce challenge, il faut que le dongle puisse passer des requêtes à destination du fournisseur de service via le réseau. Suivant le cas, le dongle peut posséder sa propre interface réseau, ou faire appel à une interface extérieure. Selon que cette authentification réussit ou échoue, le fournisseur de service 60 peut ou non communiquer avec le conteneur sécurisé 44b.

Dans une sixième étape (26), dans le cas où la communication est possible, la suite de l'échange peut se faire par un protocole classique comme ISO 7816, PKCS ou autre. Ce protocole est supporté par le système d'exploitation du conteneur sécurisé 44b, via le système d'exploitation du dongle 40, pour donner l'expérience au fournisseur de service 60 d'avoir à faire à un élément acteur dans le protocole choisi.

On présente maintenant, en relation avec la figure 3, une troisième phase du mode de réalisation particulier du procédé selon l'invention, à savoir une phase de révocation d'une autorisation d'accès spécifique, préalablement attribuée au fournisseur de service 60 (tiers) pour un conteneur sécurisé donné 44b du dongle 40.

On suppose que la première phase décrite ci-dessus en relation avec la figure 1 a déjà été effectuée, et donc que le conteneur sécurisé 44b stocke notamment l'autorisation d'accès spécifique au fournisseur de services 60.

Dans une première étape (31), l'opérateur 50 fait au dongle 40 une demande de révocation de cette autorisation d'accès spécifique à ce fournisseur de services 60 pour ce conteneur sécurisé 44b.

Dans une deuxième étape (32), le dongle 40 authentifie l'opérateur 50 au moyen d'une autorisation d'accès (un secret) spécifique à l'opérateur et qui a été déposée à la personnalisation du dongle, avant sa commercialisation.

Dans une troisième étape (33), le système d'exploitation (OS) du dongle répercute cette demande au conteneur sécurisé concerné 44b, et ce dernier effectue la révocation demandée.

Bien que l'invention ait été décrite ci-dessus en relation avec un nombre limité de modes de réalisation, l'homme du métier, à la lecture de la présente description, comprendra que d'autres modes de réalisation peuvent être imaginés sans sortir du cadre de la présente invention. En conséquence, la portée de l'invention n'est limitée que par les revendications ci-jointes.

## Revendications

1. Procédé de communication entre un dispositif de stockage sécurisé d'informations (40) et au moins un tiers (60) avec lequel sont échangées lesdites informations, une entité (50) assurant la gestion d'une pluralité de dispositifs de stockage sécurisé d'informations à laquelle appartient ledit dispositif, **caractérisé en ce qu'**il comprend les étapes suivantes :
- l'entité dépose (6) dans un conteneur sécurisé (44b), compris dans ledit dispositif et spécifique à un tiers donné, une autorisation de communiquer entre le conteneur sécurisé et ledit tiers donné ;
- l'entité envoie (7) au tiers donné un identifiant du dispositif, une adresse du dispositif au sein d'un réseau de communication, un identifiant du conteneur sécurisé et ladite autorisation de communiquer ;
- le tiers donné tente d'établir (8) une communication avec le conteneur sécurisé, en utilisant l'adresse du dispositif, l'identifiant du dispositif, l'identifiant du conteneur sécurisé et l'autorisation de communiquer ;
- avant d'accepter la communication entre le tiers donné et le conteneur sécurisé, le dispositif vérifie (9) que l'autorisation de communiquer transmise par le tiers est acceptable au vu de l'autorisation de communiquer préalablement déposée par l'entité dans le conteneur sécurisé.

2. Procédé selon la revendication 1, **caractérisé en ce qu'**il comprend en outre les étapes suivantes (10), effectuées après que la communication entre le conteneur sécurisé et le tiers donné a été acceptée :
- le tiers donné envoie au conteneur sécurisé une première autorisation d'accès spécifique au tiers donné pour le conteneur sécurisé ;
- le conteneur sécurisé stocke ladite première autorisation d'accès, de sorte que seul le tiers donné, qui dispose de la première autorisation d'accès, est ultérieurement autorisé par le conteneur sécurisé, indépendamment de l'entité, à utiliser et modifier des informations contenues dans le conteneur sécurisé.

3. Procédé selon la revendication 2, **caractérisé en ce qu'**il comprend en outre les étapes suivantes :
- l'entité envoie (31) au dispositif une demande de révocation de ladite première autorisation d'accès spécifique au tiers donné pour le conteneur sécurisé ;
- le dispositif révoque (33) la première autorisation d'accès spécifique au tiers donné pour le conteneur sécurisé.

4. Procédé selon la revendication 3, **caractérisé en ce que** l'étape de révocation de la première autorisation d'accès est précédée de l'étape suivante :
- le dispositif authentifie (32) l'entité, avec une seconde autorisation d'accès préalablement fournie par l'entité et déposée dans le dispositif, avant d'accepter de révoquer la première autorisation d'accès spécifique au tiers donné pour le conteneur sécurisé.

5. Procédé selon l'une quelconque des revendications 1 à 4, **caractérisé en ce que** l'étape de dépôt de l'autorisation de communiquer dans le conteneur sécurisé est précédée des étapes suivantes :
- l'entité transmet (4) au dispositif une demande de dépôt de ladite autorisation de communiquer dans le conteneur sécurisé ;
- le dispositif authentifie (5) l'entité, avec une troisième autorisation d'accès préalablement fournie par l'entité et déposée dans le dispositif, avant d'accepter le dépôt dans le conteneur sécurisé de l'autorisation de communiquer.

6. Procédé selon l'une quelconque des revendications 1 à 5, **caractérisé en ce que** l'étape de dépôt de l'autorisation de communiquer dans le conteneur sécurisé est précédée de l'étape suivante :
- le tiers donné demande (3) à l'entité de déposer dans le conteneur sécurisé l'autorisation de communiquer entre le tiers donné et le conteneur sécurisé, le tiers donné fournissant à l'entité l'identifiant du dispositif.

7. Procédé selon l'une quelconque des revendications 1 à 6, **caractérisé en ce que**, après que la communication entre le conteneur sécurisé et le tiers donné a été acceptée, le tiers donné envoie (11) des informations au conteneur sécurisé afin que le conteneur sécurisé les stocke.

8. Procédé selon l'une quelconque des revendications 1 à 7, **caractérisé en ce que** les informations stockées dans le conteneur sécurisé appartiennent au groupe comprenant des données et des programmes.

9. Procédé selon l'une quelconque des revendications 1 à 8, **caractérisé en ce que** les informations stockées dans le conteneur sécurisé permettent de réaliser une fonction appartenant au groupe comprenant :
- authentification par le tiers donné d'un porteur du dispositif ;
- porte-monnaie électronique ;
- autorisation d'utilisation d'un appareil avec lequel coopère le dispositif ;
- maintenance d'un appareil avec lequel coopère le dispositif ;
- gestion d'une fonctionnalité d'un appareil avec lequel coopère le dispositif.

10. Procédé selon l'une quelconque des revendications 1 à 9, **caractérisé en ce que** le tiers donné (60) est un fournisseur de services.

11. Procédé selon l'une quelconque des revendications 1 à 10, **caractérisé en ce qu'**il permet la communication entre le dispositif et au moins deux tiers, au moins un conteneur spécifique à chaque tiers étant compris dans le dispositif.

12. Système de communication entre un dispositif de stockage sécurisé d'informations (40) et au moins un tiers (60) avec lequel sont échangées lesdites informations, une entité (50) assurant la gestion d'une pluralité de dispositifs de stockage d'informations à laquelle appartient ledit dispositif, **caractérisé en ce que** :
- l'entité comprend des moyens de dépôt dans un conteneur sécurisé, compris dans ledit dispositif et spécifique à un tiers donné, d'une autorisation de communiquer entre le conteneur sécurisé et ledit tiers donné ;
- l'entité comprend des moyens d'envoi au tiers donné d'un identifiant du dispositif, une adresse du dispositif au sein d'un réseau de communication, un identifiant du conteneur sécurisé et ladite autorisation de communiquer ;
- le tiers donné comprend des moyens permettant de tenter d'établir une communication avec le conteneur sécurisé, en utilisant l'adresse du dispositif, l'identifiant du dispositif, l'identifiant du conteneur sécurisé et l'autorisation de communiquer ;
- le dispositif comprend des moyens de vérification que l'autorisation de communiquer transmise par le tiers donné est acceptable au vu de l'autorisation de communiquer préalablement déposée par l'entité dans le conteneur sécurisé, de sorte que le dispositif n'accepte la communication entre le tiers donné et le conteneur sécurisé que si les moyens de vérification décident que l'autorisation de communiquer transmise par le tiers est acceptable.

13. Entité (50) assurant la gestion d'une pluralité de dispositifs de stockage sécurisé d'informations, **caractérisée en ce qu'**elle comprend :
- des moyens de dépôt dans un conteneur sécurisé (44b), compris dans un dispositif donné et spécifique à un tiers (60) donné, d'une autorisation de communiquer entre le conteneur sécurisé et ledit tiers donné ;
- des moyens d'envoi au tiers donné d'un identifiant du dispositif donné, une adresse du dispositif donné au sein d'un réseau de communication, un identifiant du conteneur sécurisé et ladite autorisation de communiquer ;
de sorte que le tiers donné puisse tenter d'établir une communication avec le conteneur sécurisé, en utilisant l'adresse du dispositif donné, l'identifiant du dispositif donné, l'identifiant du conteneur sécurisé et l'autorisation de communiquer, et que avant d'accepter la communication entre le tiers donné et le conteneur sécurisé, le dispositif donné puisse vérifier que l'autorisation de communiquer transmise par le tiers est acceptable au vu de l'autorisation de communiquer préalablement déposée par l'entité dans le conteneur sécurisé.

14. Dispositif de stockage sécurisé d'informations (40), du type comprenant des moyens de communication avec au moins un tiers (60) avec lequel sont échangées lesdites informations, **caractérisé en ce qu'**il comprend :
- des moyens de stockage dans un conteneur sécurisé, compris dans ledit dispositif et spécifique à un tiers donné, d'une autorisation de communiquer entre le conteneur sécurisé et ledit tiers donné, ladite autorisation de communiquer étant déposée par une entité (50) assurant la gestion d'une pluralité de dispositifs de stockage sécurisé d'informations à laquelle appartient ledit dispositif ; des moyens de vérification qu'une autorisation de communiquer transmise par le tiers donné est acceptable au vu de l'autorisation de communiquer préalablement déposée par l'entité dans le conteneur sécurisé, de sorte que le dispositif n'accepte la communication entre le tiers donné et le conteneur sécurisé que si les moyens de vérification décident que l'autorisation de communiquer transmise par le tiers est acceptable.

15. Tiers (60), du type comprenant des moyens de communication avec un dispositif de stockage sécurisé (40) d'informations, **caractérisé en ce qu'**il comprend :
- des moyens de réception, en provenance d'une entité (50) assurant la gestion d'une pluralité de dispositifs de stockage sécurisé d'informations à laquelle appartient ledit dispositif, d'un identifiant du dispositif, une adresse du dispositif au sein d'un réseau de communication, un identifiant d'un conteneur sécurisé, compris dans ledit dispositif et spécifique audit tiers, et une autorisation de communiquer entre le conteneur sécurisé et ledit tiers ;
- des moyens permettant de tenter d'établir une communication avec le conteneur sécurisé, en utilisant l'adresse du dispositif, l'identifiant du dispositif, l'identifiant du conteneur sécurisé et l'autorisation de communiquer ;
de sorte qu'avant d'accepter la communication entre le tiers et le conteneur sécurisé, le dispositif puisse vérifier que l'autorisation de communiquer transmise par le tiers est acceptable au vu d'une autorisation de communiquer préalablement déposée par l'entité dans le conteneur sécurisé.

## Claims

1. Method for communication between a secure information storage device (40) and at least one third party (60) with which said information is exchanged, an entity (50) handling the management of a plurality of secure information storage devices to which said device belongs, **characterized in that** it comprises the following steps:
- the entity deposits (6), in a secure container (44b), included in said device and specific to a given third party, an authorization to communicate between the secure container and said given third party;
- the entity sends (7) to the given third party an identifier of the device, an address of the device within a communication network, an identifier of the secure container and said authorization to communicate;
- the given third party tries to set up (8) a communication with the secure container, by using the address of the device, the identifier of the device, the identifier of the secure container and the authorization to communicate;
- before accepting the communication between the given third party and the secure container, the device checks (9) that the authorization to communicate transmitted by the third party is acceptable in light of the authorization to communicate previously deposited by the entity in the secure container.

2. Method according to Claim 1, **characterized in that** it also comprises the following steps (10), performed after the communication between the secure container and the given third party has been accepted:
- the given third party sends to the secure container a first access authorization specific to the given third party for the secure container;
- the secure container stores said first access authorization, so that only the given third party, which has the first access authorization, is subsequently authorized by the secure container, independently of the entity, to use and modify information contained in the secure container.

3. Method according to Claim 2, **characterized in that** it also comprises the following steps:
- the entity sends (31) to the device a request to revoke said first access authorization specific to the given third party for the secure container;
- the device revokes (33) the first access authorization specific to the given third party for the secure container.

4. Method according to Claim 3, **characterized in that** the step of revocation of the first access authorization is preceded by the following step:
- the device authenticates (32) the entity, with a second access authorization previously supplied by the entity and deposited in the device, before accepting to revoke the first access authorization specific to the given third party for the secure container.

5. Method according to any one of Claims 1 to 4, **characterized in that** the step of deposition of the authorization to communicate in the secure container is preceded by the following steps:
- the entity transmits (4) to the device a request to deposit said authorization to communicate in the secure container;
- the device authenticates (5) the entity, with a third access authorization previously supplied by the entity and deposited in the device, before accepting the deposition in the secure container of the authorization to communicate.

6. Method according to any one of Claims 1 to 5, **characterized in that** the step of deposition of the authorization to communicate in the secure container is preceded by the following step:
- the given third party sends a request (3) to the entity to deposit in the secure container the authorization to communicate between the given third party and the secure container, the given third party supplying the entity with the identifier of the device.

7. Method according to any one of Claims 1 to 6, **characterized in that**, after the communication between the secure container and the given third party has been accepted, the given third party sends (11) information to the secure container for the secure container to store the information.

8. Method according to any one of Claims 1 to 7, **characterized in that** the information stored in the secure container belongs to the group comprising data and programs.

9. Method according to any one of Claims 1 to 8, **characterized in that** the information stored in the secure container makes it possible to provide a function belonging to the group comprising:
- authentication by the given third party of a holder of the device;
- electronic purse;
- authorization to use an appliance with which the device cooperates;
- maintenance of an appliance with which the device cooperates;
- management of a functionality of an appliance with which the device cooperates.

10. Method according to any one of Claims 1 to 9, **characterized in that** the given third party (60) is a service provider.

11. Method according to any one of Claims 1 to 10, **characterized in that** it allows communication between the device and at least two third parties, at least one container specific to each third party being included in the device.

12. System for communication between a secure information storage device (40) and at least one third party (60) with which said information is exchanged, an entity (50) handling the management of a plurality of secure information storage devices to which said device belongs, **characterized in that**:
- the entity comprises means for depositing, in a secure container, included in said device and specific to a given third party, an authorization to communicate between the secure container and said given third party;
- the entity comprises means for sending to the given third party an identifier of the device, an address of the device within a communication network, an identifier of the secure container and said authorization to communicate;
- the given third party comprises means for trying to set up a communication with the secure container, by using the address of the device, the identifier of the device, the identifier of the secure container and the authorization to communicate;
- the device comprises means for checking that the authorization to communicate transmitted by the given third party is acceptable in light of the authorization to communicate previously deposited by the entity in the secure container, so that the device accepts the communication between the given third party and the secure container only if the checking means decide that the authorization to communicate transmitted by the third party is acceptable.

13. Entity (50) handling the management of a plurality of secure information storage devices, **characterized in that** it comprises:
- means for depositing, in a secure container (44b), included in a given device and specific to a given third party (60), an authorization to communicate between the secure container and said given third party;
- means for sending to the given third party an identifier of the given device, an address of the given device within a communication network, an identifier of the secure container and said authorization to communicate;
so that the given third party can try to set up a communication with the secure container, by using the address of the given device, the identifier of the given device, the identifier of the secure container and the authorization to communicate, and that, before accepting the communication between the given third party and the secure container, the given device can check that the authorization to communicate transmitted by the third party is acceptable in light of the authorization to communicate previously deposited by the entity in the secure container.

14. Secure information storage device (40), of the type comprising means of communication with at least one third party (60) with which said information is exchanged, **characterized in that** it comprises:
- means for storing, in a secure container, included in said device and specific to a given third party, an authorization to communicate between the secure container and said given third party, said authorization to communicate being deposited by an entity (50) and handling the management of a plurality of secure information storage devices to which said device belongs;
means for checking that an authorization to communicate transmitted by the given third party is acceptable in light of the authorization to communicate previously deposited by the entity in the secure container, so that the device accepts the communication between the given third party and the secure container only if the checking means decide that the authorization to communicate transmitted by the third party is acceptable.

15. Third party (60), of the type comprising means for communication with a secure information storage device (40), **characterized in that** it comprises:
- means for receiving, from an entity (50) handling the management of a plurality of secure information storage devices to which said device belongs, an identifier of the device, an address of the device within a communication network, an identifier of a secure container, included in said device and specific to said third party, and an authorization to communicate between the secure container and said third party;
- means making it possible to try to set up a communication with the secure container, by using the address of the device, the identifier of the device, the identifier of the secure container and the authorization to communicate;
so that, before accepting the communication between the third party and the secure container, the device can check that the authorization to communicate transmitted by the third party is acceptable in light of an authorization to communicate previously deposited by the entity in the secure container.

## Patentansprüche

1. Verfahren zur Kommunikation zwischen einer Vorrichtung zur sicheren Informationsspeicherung (40) und mindestens einem Dritten (60), mit dem die Informationen ausgetauscht werden, wobei eine Entität (50) die Verwaltung einer Vielzahl von Vorrichtungen zur sicheren Informationsspeicherung gewährleistet, zu der die Vorrichtung gehört, **dadurch gekennzeichnet, dass** es die folgenden Schritte enthält:
- die Entität hinterlegt (6) in einem Sicherheitsbehälter (44b), der in der Vorrichtung enthalten und für einen gegebenen Dritten spezifisch ist, eine Kommunikationsberechtigung zwischen dem Sicherheitsbehälter und dem gegebenen Dritten;
- die Entität sendet (7) an den gegebenen Dritten eine Kennung der Vorrichtung, eine Adresse der Vorrichtung innerhalb eines Kommunikationsnetzes, eine Kennung des Sicherheitsbehälters **und die** Kommunikationsberechtigung;
- der gegebene Dritte versucht, eine Kommunikation mit dem Sicherheitsbehälter aufzubauen (8), indem er die Adresse der Vorrichtung, die Kennung der Vorrichtung, die Kennung des Sicherheitsbehälters und die Kommunikationsberechtigung verwendet;
- ehe sie die Kommunikation zwischen dem gegebenen Dritten und dem Sicherheitsbehälter akzeptiert, überprüft die Vorrichtung (9), ob die vom Dritten übertragene Kommunikationsberechtigung angesichts der vorher von der Entität im Sicherheitsbehälter hinterlegten Kommunikationsberechtigung akzeptabel ist.

2. Verfahren nach Anspruch 1, **dadurch gekennzeichnet, dass** es außerdem die folgenden Schritte (10) enthält, die durchgeführt werden, nachdem die Kommunikation zwischen dem Sicherheitsbehälter und dem gegebenen Dritten akzeptiert wurde:
- der gegebene Dritte sendet an den Sicherheitsbehälter eine für den gegebenen Dritten spezifische erste Zugriffsberechtigung für den Sicherheitsbehälter;
- der Sicherheitsbehälter speichert die erste Zugriffsberechtigung, so dass nur der gegebene Dritte, der über die erste Zugriffsberechtigung verfügt, später vom Sicherheitsbehälter, unabhängig von der Entität, berechtigt wird, im Sicherheitsbehälter enthaltene Informationen zu verwenden und zu verändern.

3. Verfahren nach Anspruch 2, **dadurch gekennzeichnet, dass** es außerdem die folgenden Schritte enthält:
- die Entität sendet (31) an die Vorrichtung eine Anforderung des Widerrufs der für den gegebenen Dritten spezifischen ersten Zugriffsberechtigung für den Sicherheitsbehälter;
- die Vorrichtung widerruft (33) die für den gegebenen Dritten spezifische erste Zugriffsberechtigung für den Sicherheitsbehälter.

4. Verfahren nach Anspruch 3, **dadurch gekennzeichnet, dass** vor dem Schritt des Widerrufs der ersten Zugriffsberechtigung der folgende Schritt liegt:
- die Vorrichtung authentifiziert (32) die Entität mit einer zweiten Zugriffsberechtigung, die vorher von der Entität geliefert und in der Vorrichtung hinterlegt wurde, ehe sie akzeptiert, die für den gegebenen Dritten spezifische erste Zugriffsberechtigung für den Sicherheitsbehälter zu widerrufen.

5. Verfahren nach einem der Ansprüche 1 bis 4, **dadurch gekennzeichnet, dass** vor dem Schritt des Hinterlegens der Kommunikationsberechtigung im Sicherheitsbehälter die folgenden Schritte liegen:
- die Entität überträgt (4) an die Vorrichtung eine Anforderung zum Hinterlegen der Kommunikationsberechtigung im Sicherheitsbehälter;
- die Vorrichtung authentifiziert (5) die Entität mit einer dritten Zugriffsberechtigung, die vorher von der Entität geliefert und in der Vorrichtung hinterlegt wurde, ehe sie die Hinterlegung der Kommunikationsberechtigung im Sicherheitsbehälter akzeptiert.

6. Verfahren nach einem der Ansprüche 1 bis 5, **dadurch gekennzeichnet, dass** vor dem Schritt der Hinterlegung der Kommunikationsberechtigung im Sicherheitsbehälter der folgende Schritt liegt:
- der gegebene Dritte fordert (3) von der Entität, die Kommunikationsberechtigung zwischen dem gegebenen Dritten und dem Sicherheitsbehälter im Sicherheitsbehälter zu hinterlegen, wobei der gegebene Dritte an die Entität die Kennung der Vorrichtung liefert.

7. Verfahren nach einem der Ansprüche 1 bis 6, **dadurch gekennzeichnet, dass**, nachdem die Kommunikation zwischen dem Sicherheitsbehälter und dem gegebenen Dritten akzeptiert wurde, der gegebene Dritte an den Sicherheitsbehälter Informationen sendet (11), damit der Sicherheitsbehälter sie speichert.

8. Verfahren nach einem der Ansprüche 1 bis 7, **dadurch gekennzeichnet, dass** die im Sicherheitsbehälter gespeicherten Informationen zu der Gruppe gehören, die Daten und Programme enthält.

9. Verfahren nach einem der Ansprüche 1 bis 8, **dadurch gekennzeichnet, dass** die im Sicherheitsbehälter gespeicherten Informationen es ermöglichen, eine Funktion durchzuführen, die zu der Gruppe gehört, die enthält:
- Authentifizierung eines Inhabers der Vorrichtung durch den gegebenen Dritten;
- elektronisches Portemonnaie;
- Berechtigung zur Benutzung eines Geräts, mit dem die Vorrichtung zusammenwirkt;
- Wartung eines Geräts, mit dem die Vorrichtung zusammenwirkt;
- Verwaltung einer Funktionalität eines Geräts, mit dem die Vorrichtung zusammenwirkt.

10. Verfahren nach einem der Ansprüche 1 bis 9, **dadurch gekennzeichnet, dass** der gegebene Dritte (60) ein Diensteanbieter ist.

11. Verfahren nach einem der Ansprüche 1 bis 10, **dadurch gekennzeichnet, dass** es die Kommunikation zwischen der Vorrichtung und mindestens zwei Dritten erlaubt, wobei mindestens ein für jeden Dritten spezifischer Behälter in der Vorrichtung enthalten ist.

12. System zur Kommunikation zwischen einer Vorrichtung zur sicheren Informationsspeicherung (40) und mindestens einem Dritten (60), mit dem die Informationen ausgetauscht werden, wobei eine Entität (50) die Verwaltung einer Vielzahl von Vorrichtungen zur sicheren Informationsspeicherung gewährleistet, zu der die Vorrichtung gehört, **dadurch gekennzeichnet, dass**:
- die Entität Einrichtungen zum Hinterlegen in einem Sicherheitsbehälter, der in der Vorrichtung enthalten und für einen gegebenen Dritten spezifisch ist, einer Kommunikationsberechtigung zwischen dem Sicherheitsbehälter und dem gegebenen Dritten enthält;
- die Entität Einrichtungen zum Senden einer Kennung der Vorrichtung, einer Adresse der Vorrichtung in einem Kommunikationsnetz, einer Kennung des Sicherheitsbehälters und der Kommunikationsberechtigung an den gegebenen Dritten enthält;
- der gegebene Dritte Einrichtungen enthält, die es ermöglichen zu versuchen, unter Verwendung der Adresse der Vorrichtung, der Kennung der Vorrichtung, der Kennung des Sicherheitsbehälters und der Kommunikationsberechtigung eine Kommunikation mit dem Sicherheitsbehälter aufzubauen;
- die Vorrichtung Einrichtungen zur Überprüfung enthält, ob die vom gegebenen Dritten übertragene Kommunikationsberechtigung angesichts der vorher von der Entität im Sicherheitsbehälter hinterlegten Kommunikationsberechtigung akzeptabel ist, so dass die Vorrichtung die Kommunikation zwischen dem gegebenen Dritten und dem Sicherheitsbehälter nur akzeptiert, wenn die Überprüfungseinrichtungen entscheiden, dass die von dem Dritten übertragene Kommunikationsberechtigung akzeptabel ist.

13. Entität (50), die die Verwaltung einer Vielzahl von Vorrichtungen zur sicheren Informationsspeicherung gewährleistet, **dadurch gekennzeichnet, dass** sie enthält:
- Einrichtungen zum Hinterlegen in einem Sicherheitsbehälter (44b), der in einer gegebenen Vorrichtung enthalten und für einen gegebenen Dritten (60) spezifisch ist, einer Kommunikationsberechtigung zwischen dem Sicherheitsbehälter und dem gegebenen Dritten;
- Einrichtungen zum Senden einer Kennung der Vorrichtung, einer Adresse der gegebenen Vorrichtung in einem Kommunikationsnetz, einer Kennung des Sicherheitsbehälters und der Kommunikationsberechtigung an den gegebenen Dritten;
so dass der gegebene Dritte versuchen kann, eine Kommunikation mit dem Sicherheitsbehälter aufzubauen, indem er die Adresse der gegebenen Vorrichtung, die Kennung der gegebenen Vorrichtung, die Kennung des Sicherheitsbehälters und die Kommunikationsberechtigung benutzt, und dass, vor dem Akzeptieren der Kommunikation zwischen dem gegebenen Dritten und dem Sicherheitsbehälter, die gegebene Vorrichtung überprüfen kann, ob die vom Dritten übertragene Kommunikationsberechtigung angesichts der vorher von der Entität im Sicherheitsbehälter hinterlegten Kommunikationsberechtigung akzeptabel ist.

14. Vorrichtung zur sicheren Informationsspeicherung (40) von der Art, die Einrichtungen zur Kommunikation mit mindestens einem Dritten (60) enthält, mit dem die Informationen ausgetauscht werden, **dadurch gekennzeichnet, dass** sie enthält:
- Einrichtungen zum Speichern in einem Sicherheitsbehälter, der in der Vorrichtung enthalten und für einen gegebenen Dritten spezifisch ist, einer Kommunikationsberechtigung zwischen dem Sicherheitsbehälter und dem gegebenen Dritten, wobei die Kommunikationsberechtigung durch eine Entität (50) hinterlegt wird, die die Verwaltung einer Vielzahl von Vorrichtungen zur sicheren Informationsspeicherung gewährleistet, zu der die Vorrichtung gehört;
- Einrichtungen zur Überprüfung, ob eine vom gegebenen Dritten übertragene Kommunikationsberechtigung angesichts der vorher von der Entität im Sicherheitsbehälter hinterlegten Kommunikationsberechtigung akzeptabel ist, so dass die Vorrichtung die Kommunikation zwischen dem gegebenen Dritten und dem Sicherheitsbehälter nur akzeptiert, wenn die Überprüfungseinrichtungen entscheiden, dass die von dem Dritten übertragene Kommunikationsberechtigung akzeptabel ist.

15. Dritter (60) von der Art, die Einrichtungen zur Kommunikation mit einer Vorrichtung zur sicheren Informationsspeicherung (40) enthält, **dadurch gekennzeichnet, dass** er enthält:
- Einrichtungen für den Empfang von einer Entität (50), die die Verwaltung einer Vielzahl von Vorrichtungen zur sicheren Informationsspeicherung gewährleistet, zu der die Vorrichtung gehört, einer Kennung der Vorrichtung, einer Adresse der Vorrichtung innerhalb eines Kommunikationsnetzes, einer Kennung eines Sicherheitsbehälters, der in der Vorrichtung enthalten und für den Dritten spezifisch ist, und einer Kommunikationsberechtigung zwischen dem Sicherheitsbehälter und dem Dritten;
- Einrichtungen, die es ermöglichen zu versuchen, unter Verwendung der Adresse der Vorrichtung, der Kennung der Vorrichtung, der Kennung des Sicherheitsbehälters und der Kommunikationsberechtigung eine Kommunikation mit dem Sicherheitsbehälter aufzubauen;
so dass die Vorrichtung, ehe sie die Kommunikation zwischen dem Dritten und dem Sicherheitsbehälter akzeptiert, überprüfen kann, ob die von dem Dritten übertragene Kommunikationsberechtigung angesichts der vorher von der Entität im Sicherheitsbehälter hinterlegten Kommunikationsberechtigung akzeptabel ist.
